# EUROPEAN PATENT APPLICATION

(11) **EP 4 201 587 A1**
(43) Date of publication of application: **28.06.2023**
(21) Application number: 21217416.3
(22) Date of filing: 23.12.2021
(51) Int. Cl.: B23Q 11/00, B23B 51/04

(54) **DUST EXTRACTING DEVICE FOR A TOOL BIT**

(71) Applicant: HILTI Aktiengesellschaft, 9494 Schaan (LI)
(72) Inventor: Szabó, József, 6000 KECSKEMÉT (HU); Facskó, Erik, 6353 Dusnok (HU); Bihari, Dávid Imre, 6625 Fábiánsebestyén (HU)
(74) Representative: Hilti Aktiengesellschaft Corporate Intellectual Property

(57) **Abstract**

A dust extracting device (72) configured to be connected to a tool bit (71) of a power tool system that performs a defined operation of a workpiece, the dust extracting device (72) configured to collect dust and debris generated during operating the workpiece, comprising a suction head (84) having a body part (91) with a through-opening (92) and having a contact face (93) configured to be placed against the workpiece, a suction tube (85) having a length direction (86), a flow cross-section (A_{tube}), and a connecting element (106) configured to be connected to the tool bit (71), wherein a maximum width (Wₘₐₓ) of the suction head (84) and suction tube (85) is smaller than an inner diameter (Dᵢₙ) of a cutting ring (77) of the tool bit (71).

## Description

### Technical field

The present invention relates to a dust extracting device for a tool bit according to the definition of claim 1 and to an apparatus according to the definition of claim 7 including a tool bit and the dust extracting device according to the invention.

### Background of the invention

In the construction and remanufacturing of buildings, a considerable amount of core drills, and other power tools are necessarily utilized which result in forming dust and debris consisting of concrete dust, rock chips, shavings, steel particles and the like when a power tool engages a surface of a ceiling, wall, floor, or a construction member, such as steel mesh, reinforcement rods or wires.

A number of dust extracting devices have been proposed in prior art to prevent the dust and debris from falling in the face or eyes of the operator, to reduce the dust and debris in offices or buildings being occupied or having equipment in them, to keep the work area cleaner and safer and to extend the life expectancy of the power tool by preventing dust and debris from contacting it.

The European Patent Application EP 1 593 447 A1 discloses a dust extracting device configured to collect dust and debris generated during operating/engaging a workpiece with a power tool system that comprises a core bit and a power tool. The dust extracting device is configured to be releasable connected to the core bit of the power tool system and comprises a suction head having a through-opening and a contact face, a suction tube having a first end and a second end opposite of the first end, and a connecting element configured to be connected to the core bit. The suction tube is made from a stiff material and arranged outside of the tool shaft.

### Summary of the invention

There is a need for a dust extracting device that allows to extract as much dust and debris as possible. A need also exists for a dust extracting device that allows to review the working area and the tool bit during operating a workpiece.

The dust extracting device according to the invention is characterized in that a maximum width of the suction head and suction tube is smaller than an inner diameter of a cutting ring of the tool bit. To enable that the dust extracting device having a suction head and a suction tube can be arranged inside of a tool shaft of a tool bit, the maximum width of the suction head and suction tube must be smaller than the inner diameter of the cutting ring.

The dust extracting device includes a suction head, a suction tube, and a connecting element configured to be connected to the tool bit. The efficiency of extracting dust and debris during operating a workpiece can be enlarged since the dust extracting device can be arranged inside of the tool shaft of the tool bit. To enlarge the efficiency of extracting dust and debris, a high level of vacuum is required, and the level of vacuum can be increased by reducing the flow cross-section of the suction tube. Contrary to dust extracting devices disclosed in prior art, the flow cross-section of the suction tube can be selected to optimize the air flow inside of the dust extracting device because the diameter of the tool shaft is not an upper limit for the flow cross-section of the suction tube.

Since the dust extracting device is arranged inside of the tool shaft, the tool bit is fully accessible for the operator to review the working area and the tool bit during operating a workpiece. Furthermore, the dust extracting device according to the invention can eliminate the need for an operator to use a protective dust mask or eye protection and can greatly reduce the need for work area preparation and clean-up normally required before and after cutting or drilling. The reason for that is that the total amount of dust and debris generated during operating a workpiece is collected inside of the tool bit such that no dust and debris will be brought outside of the tool shaft.

In a preferred embodiment, the suction tube is at least one of compressible or telescopic shiftable along the length direction of the suction tube. Along its length direction, the suction tube is shiftable between a relaxed position and a fully-compressed position. Using a suction tube that is compressible and/or telescopic shiftable along its length direction allows to arrange the suction tube inside of the tool shaft.

Preferably, the suction tube has a retention element configured to urge the suction tube to return to a relaxed position. Using a suction tube having a retention element allows that the suction tube can return to its relaxed position after processing a workpiece.

In a preferred embodiment, the dust extracting device includes a first flow adapting element connected to the suction tube at its first end and configured to adapt the flow cross-section of the suction tube to the flow cross-section of the tool bit. Using a first flow adapting element allows to enlarge the efficiency of extracting dust and debris since the flow cross-section of the suction tube can be selected to optimize the air flow inside of the dust extracting device. The flow cross-section of the suction tube is selected such that the air flow through the suction tube can be optimized to create a high vacuum.

Preferably, the first flow adapting element has a first inwardly shaped section, the first inwardly shaped section configured to adapt the flow cross-section of the suction tube to the flow cross-section of the tool bit. The first inwardly shaped section allows a soft crossing of the flow cross-section at the transition of the suction tube to the tool bit.

In a preferred embodiment, the dust extracting device includes a second flow adapting element connected to the suction tube at its second end and configured to adapt the flow cross-section of the suction tube to the flow cross-section of the suction head. Using a second flow adapting element allows to enlarge the efficiency of extracting dust and debris since the flow cross-section of the suction tube can be selected to optimize the air flow inside of the dust extracting device. The flow cross-section of the suction head (through-opening) is selected such that as much dust and debris as possible can be extracted, and the flow cross-section of the suction tube is selected such that the air flow through the suction tube can be optimized to create a high vacuum.

Preferably, the second flow adapting element has a second inwardly shaped section, the second inwardly shaped section being configured to adapt the flow cross-section of the suction tube to the flow cross-section of the suction head. The second inwardly shaped section allows a soft crossing of the flow cross-section at the transition of the suction head to the suction tube.

The invention further relates to an apparatus comprising a tool bit and the dust extracting device according to the invention, the tool bit comprising a hollow tool shaft having a longitudinal axis, an endplate connected to a first end of the tool shaft, a cutting ring having an inner diameter and being connected to a second end of the tool shaft, and a connector configured to be connected in a rotatably fixed manner to a power tool, the connector being at least partially connected to the endplate.

Preferably, at least one of the suction tube and the first flow adapting element is connected via a torque proof connection to at least one of the tool shaft, the endplate, and the connector. If the dust extracting device includes a first flow adapting element, the first flow adapting element is connected in a torque proof manner to the tool bit, and, if the dust extracting device does not include a first flow adapting element, the suction tube is connected in a torque proof manner to the tool bit.

In a first preferred embodiment, the suction head is connected via a rotatable connection to at least one of the suction tube and the second flow adapting element. If the dust extracting device includes a second flow adapting element, the second flow adapting element is connected in a rotatable manner to the suction head, and, if the dust extracting device does not include a second flow adapting element, the suction tube is connected in a rotatable manner to the suction head. Connecting the suction tube or the second flow adapting element via a rotatable connection to the suction head allows that the suction head can be decoupled from the rotation of the tool bit. Said arrangement may have the advantage that the suction tube rotates together with the tool bit about the longitudinal axis and a deformation of a compressible suction tube can be avoided.

In a second preferred embodiment, the suction head is connected via a torque proof connection to at least one of the suction tube and the second flow adapting element. If the dust extracting device includes a second flow adapting element, the second flow adapting element is connected in a torque proof manner to the suction head, and, if the dust extracting device does not include a second flow adapting element, the suction tube is connected in a torque proof manner to the suction head.

Preferably, the suction head includes a first head section and a second head section, the second head section being connected in a rotatable manner to the first head section. Connecting a first head section and a second head section of the suction head via a rotatable connection to each other allows that the second head section can be decoupled from the rotation of the tool bit. Said arrangement may have the advantage that the suction tube rotates together with the tool bit about the longitudinal axis and a deformation of a compressible suction tube can be avoided.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale and they are also not to be interpreted as limiting the invention. Specifically,
- FIG. 1: shows a power tool system according to the invention during operating a workpiece, the power tool system comprising a power tool, and a first embodiment of an apparatus according to the invention including a tool bit and a dust extracting device;
- FIGS. 2A-C: show the power tool (FIG. 2A), the tool bit (FIG. 2B) and the dust extracting device (FIG. 2C) of the power tool system of FIG. 1 in an unconnected state;
- FIGS. 3A, B: show a vertical cross section of the apparatus of FIG. 1 including the tool bit and the dust extracting device in a relaxed position (FIG. 3A) and in a compressed position (FIG. 3B) of the dust extracting device;
- FIGS. 4A, B: show a second embodiment of an apparatus according to the invention in a side view (FIG. 4A) including a tool bit and a dust extracting device (FIG. 4B);
- FIG. 5: show a vertical cross section of the apparatus of FIG. 4A;
- FIGS. 6A, B: show a first variant of a suction head (FIG. 6A) and a second variant of a suction head (FIG. 6B); and
- FIGS. 7A, B: show an alternative suction tube for the dust extracting devices of FIG. 2C and FIG. 4B.

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that, the phraseology and terminology used herein is for the purpose of description and should not be regarded as limiting. The use of "including, or "comprising, or "having" and variations thereof herein is meant to encompass the items listed thereafter and equivalents thereof as well as additional items. Unless limited otherwise, the terms "connected", "coupled", and "mounted", and variations thereof herein are used broadly and encompass direct and indirect connections, couplings, and mountings. In addition, the terms "connected" and "coupled", and variations thereof are not restricted to physical or mechanical connections or couplings.

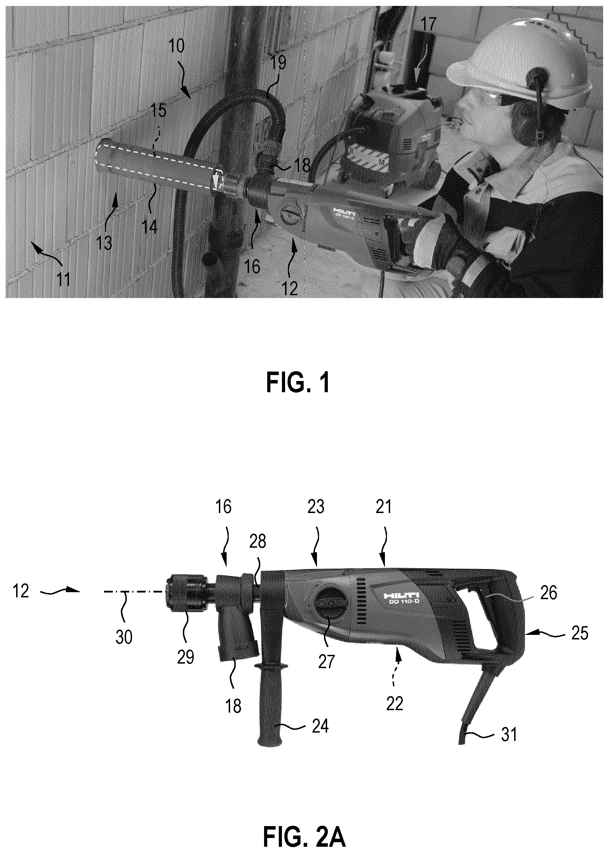

**FIG. 1** shows a power tool system **10** according to the invention during operating a workpiece **11.** The power tool system 10 comprises a power tool **12** designed as core drill and an apparatus **13** including a tool bit **14** designed as core drill bit and a dust extracting device **15** being arranged inside of the tool bit 14.

The term "tool bit" includes all operating tools having a hollow tool shaft, a cutting ring with one or more cutting elements, an endplate and an insertion end, such as core drill bits, socket drill bits and hollow saws.

Furthermore, the power tool system 10 can comprise an adaptor **16** configured to connect the power tool 12 to a vacuuming device **17.** The adaptor 16 is arranged between the tool bit 14 and the power tool 12 and includes a vacuum port **18** for connecting a hose **19** of the vacuuming device 17.

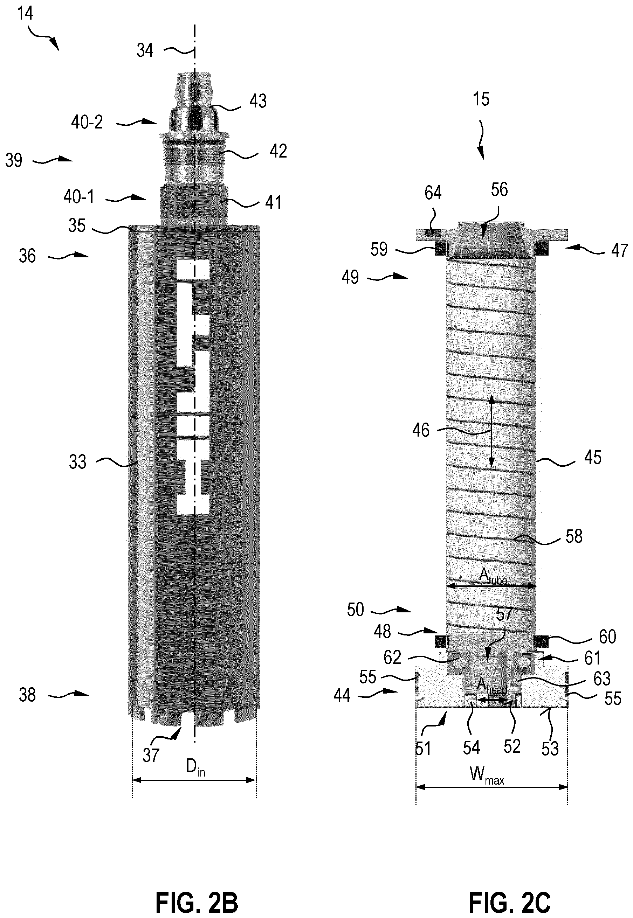

**FIGS. 2A-C** show the power tool 12 (FIG. 2A), the tool bit 14 (FIG. 2B) and the dust extracting device 15 (FIG. 2C) of the power tool system 10 in an unconnected state.

In FIG. 2A, the power tool 12 and the adaptor 16 are shown. The power tool 12 is designed as core drill and comprises a motor housing **21,** in which a motor **22** is mounted, a transmission housing **23,** in which a transmission mechanism such as a micro hammering mechanism or a rotation mechanism is mounted, a front handle **24** and a rear handle **25.** Within the rear handle 25 a trigger switch **26** is mounted by which an operator can activate the power tool 12. A mode change knob **27** can be mounted on the outside of the transmission housing 23 and can be used to change the mode of operation of the power tool 12.

On the front of the transmission housing 23 a drive spindle **28** and a tool holder **29** are mounted. The drive spindle 28 is connected in a rotatably fixed manner to the transmission mechanism and can be driven by the motor 22 about an axis of rotation **30.** The tool holder 29 is designed as separate component and configured to be connected in a rotatably fixed manner to the drive spindle 28. The tool holder 29 is capable of releasably holding the tool bit 14.

The power tool 12 shown in FIG. 2A is powered by a corded power source via an electric cable **31**, by which a main AC electric power source is supplied to the power tool 12. Alternatively, the power tool 12 can be powered cordless by a battery.

In FIG. 2A, the adaptor 16 is arranged between the transmission housing 23 and the tool holder 29. Alternatively, the adaptor 16 can be arranged between the tool holder 29 and the tool bit 14. Arranging the adaptor 16 between the tool holder 29 and the tool bit 14 can have the advantage that extracted dust and debris must not be transported through the tool holder 29.

In FIG. 2B, the tool bit 14 is shown. The tool bit 14 is designed as core drill bit with non-releasable cutting elements. The tool bit 14 comprises a hollow tool shaft **33** having a longitudinal axis **34,** an endplate **35** connected to a first end **36** of the tool shaft 33, a cutting ring **37** with cutting elements connected to a second end **38** of the tool shaft 33, and a connector **39** configured to be releasable connected to the tool holder 29 of the power tool 12. The cutting ring 37 has an inner diameter Dᵢₙ that corresponds to the diameter of a core generated during coring with the tool bit 14.

In FIG. 2B, the connector 39 comprises a first connector part **40-1** having an internal thread **41** and a second connector part **40-2** having an external thread **42** and an insertion element **43.** The two-part connector 39 is preferred since the adaptor 16 can be arranged between the first connector part 40-1 and second connector part 40-2 and reduce the effort to transport the extracted dust and debris to the vacuuming device 17.

In FIG. 2C, the dust extracting device 15 is shown. The dust extracting device 15 comprises a suction head **44,** a suction tube **45** having a length direction **46,** a first flow adapting element **47** and a second flow adapting element **48.** The first flow adapting element 47 is connected to a first end **49** of the suction tube 45, and the second flow adapting element 48 is connected to a second end **50** of the suction tube 45. The first flow adapting element 47 and the second flow adapting element 48 are configured to adapt the flow cross-section at the transition of the suction tube 45 to the tool bit 14, and at the transition of the suction head 44 to the suction tube 45.

The dust extracting device 15 is configured to be arranged inside of the tool shaft 33. The suction head 44 and suction tube 45 are limited in width perpendicular to the length direction 46. The width of the dust extracting device 15 is smaller than a maximum width Wₘₐₓ of the suction head 44 and suction tube 45.

The suction head 44 comprises a cylindrically formed body part **51** having a through-opening **52** and a contact face **53** configured to be placed against a workpiece during drilling. Additionally, the suction head 44 can comprise several grooves **54** arranged in the contact face 53 to support the suction of dust and debris during operating a workpiece. At a lateral side of the body part 51, a ring-shaped sealing element **55,** such as a sealing brush, can be arranged.

In the embodiment of FIG. 2C, the suction head 44 has a flow cross-section A_{head} which corresponds to the diameter of the through-opening 52. Over its length, the suction tube 45 has a constant flow cross-section A_{tube} which is larger than the flow cross-section A_{head} of the through-opening 52. The flow cross-section A_{head} of the suction head 44 is selected such that as much dust and debris as possible can be extracted, and the flow cross-section A_{tube} of the suction tube 45 is selected such that the air flow through the suction tube 45 can be optimized to create a high vacuum.

The first flow adapting element 47 has a first inwardly shaped section **56** configured to allow a soft crossing at the transition of the suction tube 45 to the tool bit 14, and the second flow adapting element 48 has a second inwardly shaped section **57** configured to a soft crossing at the transition of the suction head 44 to the suction tube 45. In the embodiment of FIG. 2C, the first inwardly shaped section 56 is a tapered section that reduces the flow cross-section towards the tool bit 14, and the second inwardly shaped section 57 is a tapered section that enlarges the flow cross-section towards the suction tube 45. The first inwardly shaped section 56 is configured to adapt the flow cross-section A_{tube} of the suction tube 45 to a flow cross-section A_{connector} of the connector 39, and the second inwardly shaped section 47 is configured to adapt the flow cross-section A_{tube} of the suction tube 45 to the flow cross-section A_{head} of the suction head 44.

The suction tube 45 is compressible along its length direction 46 and can be made of any suitable resilient material which permits the suction tube 45 to be compressed in its length direction 46 when in use; suitable resilient materials include various plastics, rubber, and the like. Alternatively, the suction tube 45 may be a rigid tube having at least two tube sections being shiftable to each other along the length direction 46 or the suction tube may comprise at least two compressible tube sections being shiftable to each other along the length direction 46. The suction tube 45 comprises a retention element **58** formed as helical spring that urges the suction tube 45 to return to its relaxed position.

The components of the dust extracting device 15 are connected to each other. The suction tube 45 is connected via a torque proof connection **59** to the first flow adapting element 47 and via a further torque proof connection **60** to the second flow adapting element 48. The torque proof connection 59 and the further torque proof connection 60 are formed as clamping rings. Instead of using the clamping rings 59, 60, the first flow adapting element 47 and the suction tube 45 and/or the second flow adapting element 48 and the suction tube 45 can be connected via magnets or can be glued to each other.

The suction head 44 is connected in a rotatable manner via a non-torque proof connection **61** to the second flow adapting element 48. That means that a rotation of the tool bit 14 about the longitudinal axis 34 does not result in a rotation of the suction head 44; the suction head 44 is decoupled from the rotation of the tool bit 14, the first flow adapting element 47, and the suction tube 45. The connection 61 includes a bearing element **62** that is connected in a torque proof manner to the second flow adapting element 48; a sealing element **63** may be used to protect the bearing element 62 from dust and debris.

In case that the dust extracting device 15 does not include a second flow adapting element, the suction head 44 can be connected via the rotatable connection 61 to the suction tube 45. Connecting the second flow adapting element 48 or the suction tube 45 via the rotatable connection 61 to the suction head 44 may have the advantage that the suction tube 45 rotates together with the tool bit 14 about the longitudinal axis 34 and a deformation of the compressible suction tube 45 can be avoided.

The dust extracting device 15 comprises a connecting element **64** being connected to the first flow adapting element 47 and configured to be connected to the tool bit 14. The connecting element 64 comprises a ring-shaped magnet or several magnets being arranged in the first flow adapting element 47. The tool shaft 33 and the endplate 35 are often made from a steel material which enables a magnetic connection of the dust extracting device 15 to the tool bit 14 via the connecting element 64.

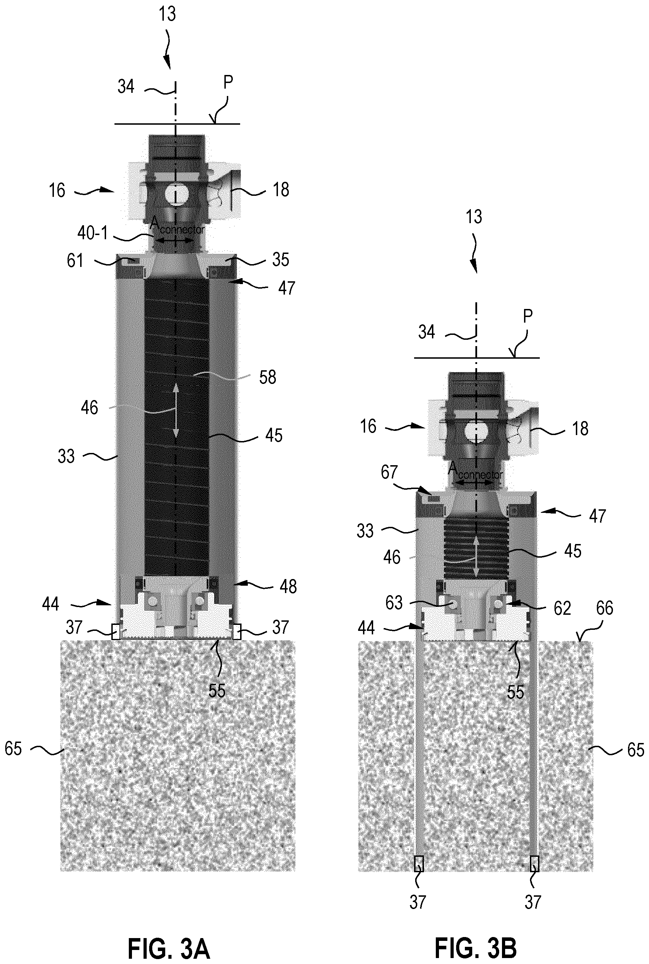

**FIGS. 3A****, B** show the apparatus 13 including the tool bit 14 and the dust extracting device 15 in a vertical cross section parallel to the longitudinal axis 34 of the tool bit 14. In FIG. 3A, the apparatus 13 is shown in the relaxed position of the suction tube 45, and in FIG. 3B, the apparatus 13 is shown in a compressed position of the suction tube 45.

To operate a workpiece **65,** the apparatus 13 is connected to the power tool 12 and placed on a surface **66** of the workpiece 68. During operating the workpiece 65, the suction tube 45 is compressed along its length direction 46 against the biasing force of the retention element 58.

The dust extracting device 15 is connected in a torque proof manner via the connecting element 64 to the tool bit 14. To connect the dust extracting device 15 to the tool bit 14, the dust extracting device 15 is inserted into the tool shaft 33 until the first flow adapting element 47 is near the endplate 35 of the tool bit 14. Due to the magnetic force, a magnetic connection **67** between the connecting element 64 and the endplate 35 will be closed automatically. This allows the operator to simply connect the dust extracting device 15 to the tool bit 14 with no additional actions required by the operator.

Connecting the dust extracting device 15 via the magnetic connection 67 to the tool bit 14 allows that the dust extracting device 15 can be used with tool bits 14 with no amendments of the tool bit 14 required. The dust extracting device 15 can be connected to all tool bits 14 having an endplate 35 made from a steel material. By using a magnetic connection, the dust extracting device 15 can be connected in a removable manner to the tool bit 14.

In the connected state of the tool bit 14 and dust extracting device 15, the suction tube 45 is arranged inside of the tool shaft 33 and the suction tube 45 is compressible along its length direction 46. To enable that the suction tube 45 can be compressed during coring, the maximum width Wₘₐₓ of the suction head 44 and suction tube 45 is smaller than the inner diameter Dᵢₙ of the cutting ring 37. The maximum width Wₘₐₓ and inner diameter Dᵢₙ are measured in a lateral plane **P** that is perpendicular to the longitudinal axis 34 of the tool shaft 33.

Arranging the suction tube 45 inside of the tool shaft 33 has the advantage that the flow cross-section A_{tube} of the suction tube 45 can be designed smaller than the tool shaft 33. The flow cross-section A_{head} of the trough-opening 52 and the flow cross-section A_{tube} of the suction tube 45 can be selected such that the flow inside of the dust extracting device 15 is optimized.

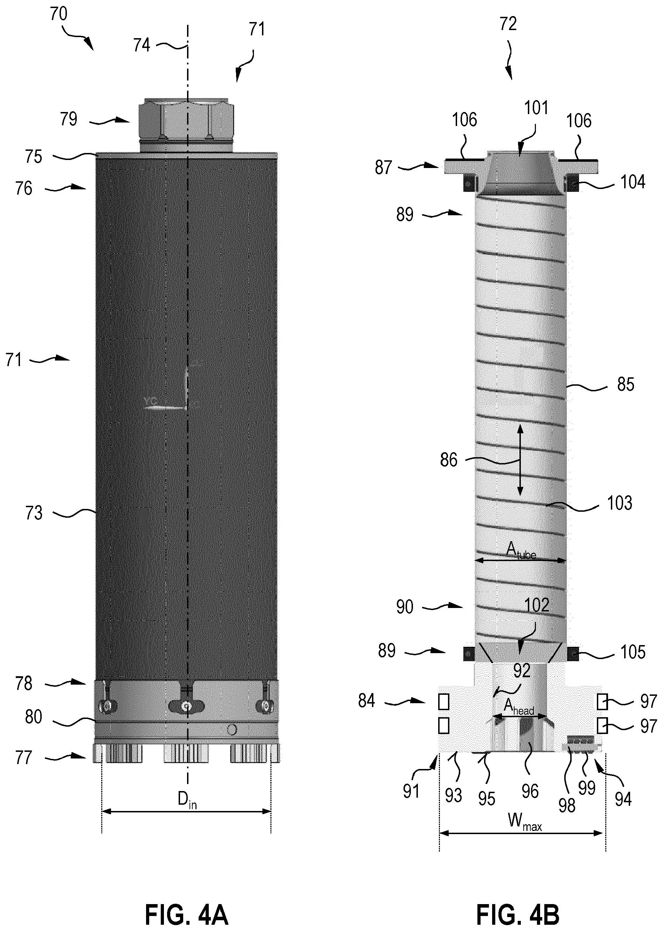

**FIGS. 4A****, B** show a second embodiment of an apparatus **70** according to the invention in a side view (FIG. 4A) including a tool bit **71** and a dust extracting device **72** (FIG. 4B) that is arranged inside of the tool bit 71.

In FIG. 4A, the apparatus 70 is shown. The tool bit 71 comprises a hollow tool shaft **73** having a longitudinal axis **74,** an endplate **75** connected to a first end **76** of the tool shaft, a cutting ring **77** with cutting elements connected to a second end **78** of the tool shaft, and a connector **79** configured to be releasable connected to the tool holder 29 of the power tool 12. The cutting ring 77 is mounted on a closed ring section **80** that can be connected to the second end 78 of the tool shaft 73 in a releasable manner. The cutting ring 77 has an inner diameter Dᵢₙ that corresponds to the diameter of a core generated during coring with the tool bit 71.

In FIG. 4B, the dust extracting device 72 is shown. The dust extracting device 72 comprises a suction head **84,** a suction tube **85** having a length direction **86** and a flow cross-section **A_{tube},** a first flow adapting element **87,** and a second flow adapting element **88.** The first flow adapting element 87 is connected to a first end **89** of the suction tube 85, and the second flow adapting element 88 is connected to a second end **90** of the suction tube 85.

The dust extracting device 72 is configured to be arranged inside of the tool shaft 73. The suction head 84 and suction tube 85 are limited in width perpendicular to the length direction 86. The width of the dust extracting device 72 is smaller than a maximum width Wₘₐₓ of the suction head 84 and suction tube 85.

The suction head 84 comprises a body part **91** with a through-opening **92** and a front face **93,** and roller elements **94** having a contact face **95** configured to be placed against a workpiece. The body part 91 can comprise several grooves **96** configured to support the suction of dust and debris during operating a workpiece. At a lateral side of the body part 91, two ring-shaped sealing elements **97,** such as sealing brushes, are arranged. The roller elements 94 include an axle element **98** and several roller disks **99** being arranged in a rotatable manner on the axle element 98, which is arranged in a plane perpendicular to the longitudinal axis 74 of the tool bit 71 and connected to the body part 91.

The suction head 84 is composed of a first head section and a second head section, which are connected in a rotatable manner to each other. The first head section includes the body part 91 and the axle element 98, which are connected to each other, and the second head section includes the roller disks 99.

The first flow adapting element 87 has a first inwardly shaped section **101** configured to allow a soft crossing at the transition of the suction tube 85 to the tool bit 71, and the second flow adapting element 88 has a second inwardly shaped section **102** configured to allow a soft crossing at the transition of the suction head 84 to the suction tube 85. In the embodiment of FIG. 4B, the first inwardly shaped section 101 is a tapered section that reduces the flow cross-section towards the tool bit 71, and the second inwardly shaped section 102 is a tapered section that enlarges the flow cross-section towards the suction tube 85.

The suction tube 85 is compressible and spring-biased in its length direction 86 and made of any suitable resilient material which permits the suction tube 85 to be compressed in its length direction 86 when in use. The suction tube 85 comprises a retention element **103** formed as helical spring that urges the suction tube 85 to return to its relaxed position.

The components of the dust extracting device 72 are connected to each other. The suction tube 85 is connected via a torque proof connection **104** to the first flow adapting element 87 and via a further torque proof connection **105** to the second flow adapting element 88. The torque proof connection 104 and the further torque proof connection 105 are formed as clamping rings. Instead of using the clamping rings 104, 105, the first flow adapting element 87 and the suction tube 85 and/or the second flow adapting element 88 and the suction tube 85 can be connected via magnets or can be glued to each other.

The dust extracting device 72 comprises a connecting element **106** being connected to the first flow adapting element 87 and configured to be connected to the tool bit 14. The connecting element 106 includes one glue strip or several glue strips being connected to the first flow adapting element 87.

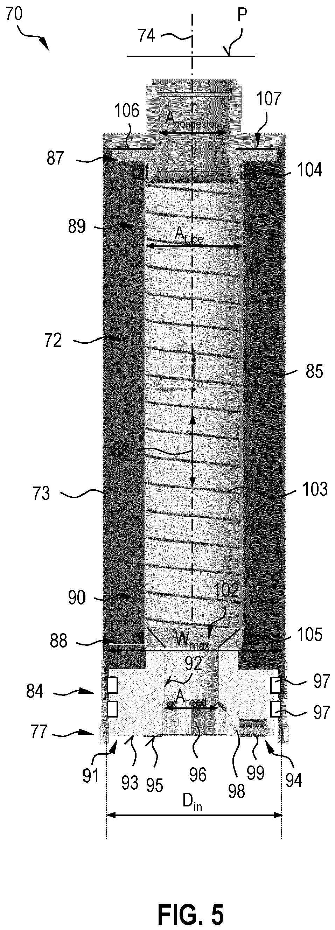

**FIG. 5** shows a vertical cross section of the apparatus 70 of FIG. 4A parallel to the longitudinal axis 74 of the tool bit 71 and the length direction 86 of the suction tube 85. The dust extracting device 72 is connected in a torque proof manner via the connecting element 106 to the tool bit 14.

The tool bit 71 and the dust extracting device 72 are connected via a glued connection **107,** which is arranged between the endplate 75 and the first flow adapting element 87. Connecting the dust extracting device 72 via the glued connection 107 to the tool bit 71 allows that the dust extracting device 72 can be used with tool bits 71 with no amendments of the tool bit 71 required. The dust extracting device 72 can be connected to all tool bits 71, independently from the material of the endplate 75.

In the connected state of the tool bit 71 and dust extracting device 72, the suction tube 85 is arranged inside of the tool shaft 73 and the suction tube 85 is compressible along its length direction 86. To allow that the suction tube 85 can be compressed during coring, the maximum width Wₘₐₓ of the suction head 84 and suction tube 85 must be smaller than the inner diameter Dᵢₙ of the cutting ring 77. The maximum width Wₘₐₓ and inner diameter Dᵢₙ are measured in a lateral plane P that is perpendicular to the longitudinal axis 74 of the tool shaft 73.

Arranging the suction tube 85 inside of the tool shaft 73 has the advantage that the flow cross-section A_{tube} of the suction tube 85 can be designed smaller than the tool shaft 73. The flow cross-section A_{head} of the suction head 84 and the flow cross-section A_{tube} of the suction tube 85 will be selected such that the flow inside of the dust extracting device 72 can be optimized.

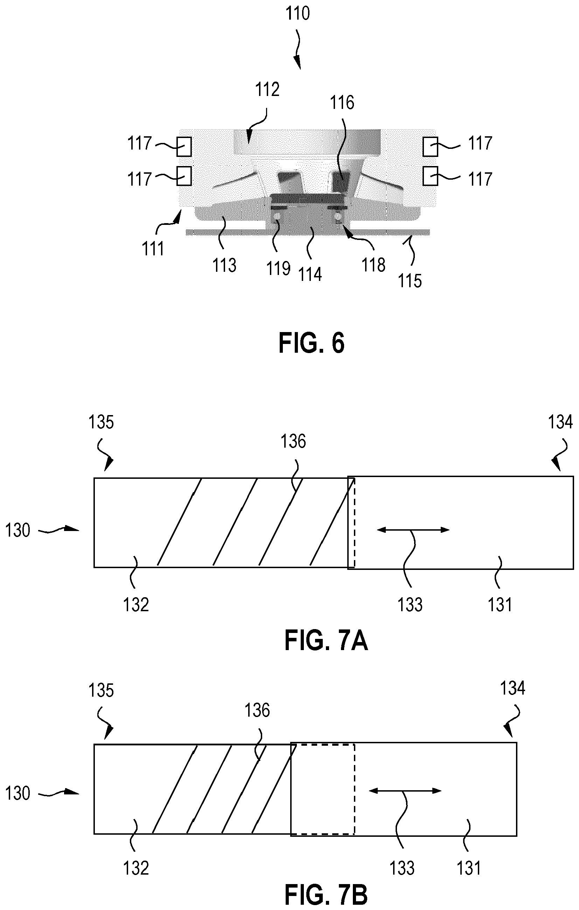

**FIG. 6** shows a variant of a suction head **110** configured to substitute the suction head 84 of the dust extracting device 72. The suction head 110 is configured to be connected in a torque proof manner to at least one of the suction tube 85 and the second flow adapting element 88.

The suction head 110 comprises a body part **111** with a through-opening **112**, a lock plate **113** and a wear plate **114** with a contact face **115** configured to be placed against a workpiece. The body part 111 can comprise several grooves **116** configured to support the suction of dust and debris during operating a workpiece. At a lateral side of the body part 111, two ring-shaped sealing elements **117**, such as sealing brushes, are arranged.

The suction head 110 is composed of a first head section and a second head section, which are connected in a rotatable manner to each other. The first head section includes the body part 111 and the lock plate 113, which are connected in a torque proof manner to each other, and the second head section includes the wear plate 114. The first head section is connected via a rotatable connection **118** to the second head section. The connection 118 includes a bearing element **119** and connecting elements such as seeger rings to connect the bearing element 119 to the lock plate 113 and to the wear plate 114.

**FIGS. 7A****, B** show an alternative suction tube **130** for the dust extracting devices of FIG. 2C and FIG. 4B. The suction tube 130 can substitute the suction tube 45 of FIG. 2C or the suction tube 85 of FIG. 4B.

The suction tube 130 is formed as a rigid tube including a first tube section **131** and a second tube section **132**, the first and second tube sections 131, 132 made from a stiff material and being shiftable to each other along a length direction **133** of the suction tube 130. A first end **134** of the suction tube 130 may be connected to the first flow adapting element 47, and a second end **135** of the suction tube 130 may be connected to the suction head 44 or to the second flow adapting element 88. The suction tube 130 may comprise a retention element **136** formed as helical spring that urges the suction tube 130 to return to its relaxed position.

Suitable stiff materials include various plastics, rubber, and the like. Using a suction tube 130 made from a stiff material has the advantage that during operating a workpiece the first tube section 131 can be shifted along the length direction 133 relative to the second tube section 132 without any deformation of the tube sections 131, 132.

## Claims

1. A dust extracting device (15; 72) configured to be connected to a tool bit (14; 71) of a power tool system (10) that performs a defined operation of a workpiece (11; 65), the dust extracting device (15; 72) configured to collect dust and debris generated during operating the workpiece (11; 65), comprising:
▪ a suction head (44; 84; 110) having a body part (51; 91; 111) with a through-opening (52; 92; 112) and having a contact face (53; 93; 115) configured to be placed against the workpiece (11; 65),
▪ a suction tube (45; 85; 130) having a length direction (46; 86; 133), a flow cross-section (A_{tube}), a first end (49; 89; 134) and a second end (50; 90; 135) opposite of the first end (49; 89; 134), and
▪ a connecting element (61; 106) configured to be connected to the tool bit (14; 71),
**characterized in that** a maximum width (Wₘₐₓ) of the suction head (44; 84; 110) and suction tube (45; 85; 130) is smaller than an inner diameter (Dᵢₙ) of a cutting ring (37; 77) of the tool bit (14; 71).

2. The dust extracting device of claim 1, **characterized in that** the suction tube (45; 85) is at least one of compressible and telescopic shiftable along the length direction (46; 86) of the suction tube (46; 86).

3. The dust extracting device of claim 2, **characterized in that** the suction tube (45; 85; 130) has a retention element (58; 103; 136) configured to urge the suction tube (45; 85; 130) to return to a relaxed position.

4. The dust extracting device of any one of claims 1 to 3, **characterized in that** the dust extracting device (15; 72) includes a first flow adapting element (47; 87) connected to the suction tube (45; 85) at its first end (49; 89) and configured to adapt the flow cross-section (A_{tube}) of the suction tube (45; 85) to the flow cross-section (A_{bit}) of the tool bit (14; 71).

5. The dust extracting device of claim 4, **characterized in that** the first flow adapting element (47; 87) has a first inwardly shaped section (56; 101), the first inwardly shaped section (56; 101) configured to adapt the flow cross-section (A_{tube}) of the suction tube (45; 85) to the flow cross-section (A_{bit}) of the tool bit (14; 71).

6. The dust extracting device of any one of claims 1 to 5, **characterized in that** the dust extracting device (15; 72) includes a second flow adapting element (48; 88) connected to the suction tube (45; 85) at its second end (50; 90) and configured to adapt the flow cross-section (A_{tube}) of the suction tube (45; 85) to the flow cross-section (A_{head}) of the suction head (84; 110; 120).

7. The dust extracting device of claim 6, **characterized in that** the second flow adapting element (48; 88) has a second inwardly shaped section (57; 102), the second inwardly shaped section (57; 102) configured to adapt the flow cross-section (A_{tube}) of the suction tube (85) to the flow cross-section (A_{head}) of the suction head (84; 110; 120).

8. An apparatus (13; 70) comprising a tool bit (14; 71) and the dust extracting device (15; 72) according to any one of claims 1 to 7, the tool bit (14; 71) comprising a hollow tool shaft (33; 73) having a longitudinal axis (34; 74), an endplate (35; 75) connected to a first end (36; 76) of the tool shaft (33; 73), a cutting ring (37; 77) having an inner diameter (Dᵢₙ) and being connected to a second end (38; 78) of the tool shaft (33; 73), and a connector (39; 79) configured to be connected in a rotatably fixed manner to a power tool (12), the connector (39; 79) being at least partially connected to the endplate (35; 75).

9. The apparatus of claim 8, **characterized in that** at least one of the suction tube (45; 85) and the first flow adapting element (47; 87) is connected via a torque proof connection (67; 107) to at least one of the tool shaft (33; 73), the endplate (35; 75) and the connector (39; 79).

10. The apparatus of claim 9, **characterized in that** the suction head (44) is connected via a rotatable connection (62) to at least one of the suction tube (45) and the second flow adapting element (48).

11. The apparatus of claim 9, **characterized in that** the suction head (84; 110) is connected via a torque proof connection (#) to at least one of the suction tube (85) and the second flow adapting element (88).

12. The apparatus of claim 11, **characterized in that** the suction head (84; 110) includes a first head section (98; 111, 113) and a second head section (99; 114), the second head section being connected in a rotatable manner to the first head section.

13. A power tool system (10) comprising a power tool (12) and an apparatus (13; 70) according to any one of claims 8 to 12.
